# EUROPEAN PATENT SPECIFICATION

(11) **EP 2 644 067 B1**
(45) Date of publication and mention of the grant of the patent: **26.11.2014**
(21) Application number: 13001578.7
(22) Date of filing: 27.03.2013
(51) Int. Cl.: A47J 31/44, A47J 31/30

(54) **Optimized funnel for moka coffee machine**
Optimierter Trichter für Moka-Kaffeemaschine
Entennoir optimisé pour machine à café du type moka

(30) Priority: 27.03.2012 IT BA20120022
(43) Date of publication of application: 02.10.2013
(73) Proprietor: Link Service SNC di Nicolo' d'Amico & C., 70126 Bari (IT)
(72) Inventor: D'Amico, Niccolò, 70126 Bari (IT)
(74) Representative: Bruni, Giovanni

(56) References cited:
- WO-A2-2011/002308

## Description

Object of the present invention is an optimized funnel for coffee makers intended be used to avoid the ground coffee to be scattered during the filter filling operation of the coffee maker. Moreover, a clean edge of the filter and thread avoids also the coffee drops to hiss and to spatter when the coffee maker is under pressure. Therefore the coffee maker, the cooker and what is around are not dirtied.

It is in fact known that to make coffee using moka pots and similar, it is needed to fill the boiler of the coffee maker with water, to position the filter on the boiler and then to fill the filter with ground coffee. When this operation is completed, it is needed to screw or however to fix otherwise the upper portion of the coffee maker on the boiler and to position the coffee maker on the cooker.

It usually occurs that during the filter filling with ground coffee a portion thereof falls from the edge of the filter.

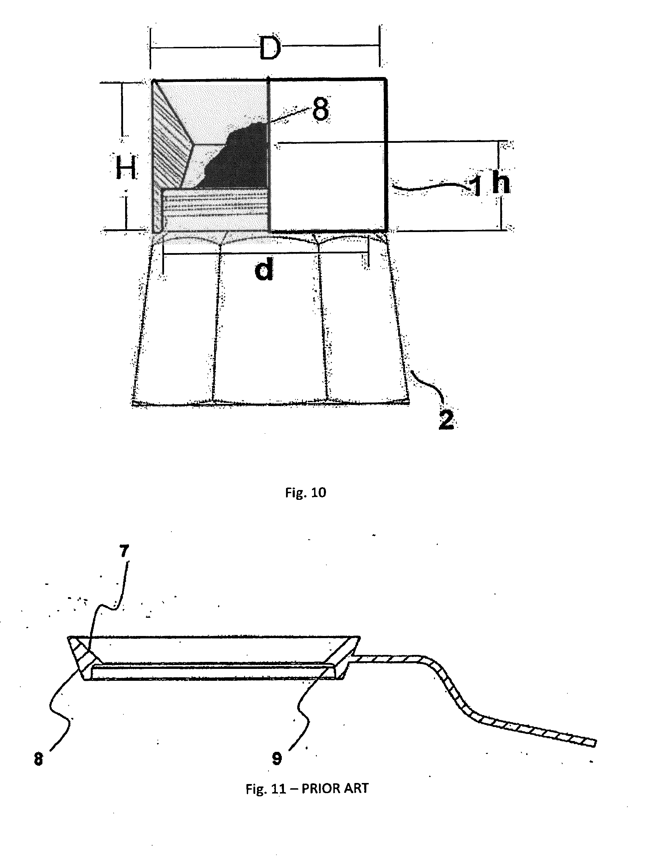

In fact when it is added in the filter the ground coffee is not compressed, and it is needed to position such a quantity in the filter that, once added as a "cone" in the filter, the peak of the ground coffee cone is higher than the filter edge, as it is shown for example in figure 10, where the ground coffee cone is indicated by number 8. In this way, when the upper portion of the coffee maker is positioned and screwed on the boiler, the ground coffee cone is squeezed and the powder fills completely the filter, thus forming a substantially homogenous pod. It is clear that this operation can cause the powder to be scattered from the filter edge.

This phenomenon is apparently of low entity and it has been ignored so far, but a careful analysis can highlight its importance. Referring to the Italian population of about 60 million inhabitants, it is possible to suppose that every morning one third thereof (very rough evaluation) makes coffee according to the described method, generally in families of 2 or 4 members. So, every morning between 5 and 10 million coffees are prepared by means of the described method. Supposing an average ground coffee loss of 0,1 g for each preparation, the daily coffee loss is between 0,5 ton and 1 ton. At the state of the art there are known some devices apt to make easy the ground coffee filling in filter-holder arms for espresso coffee machines, and not for moka pots. An example is described in the application PCT WO2011/002308 with the title "Wastage reducing device" and it is shown in figure 11. The device described in the cited application is however not usable in moka pots, since the device height is substantially lower than the diameter of the same, as it is clear from the description and the drawings. This is needed to allow the device introduction in the space available under the outlet of the coffee grinder and on the filter-holder. This aspect makes the device optimized for the use in the coffee brewing with espresso machines, but not apt to limit the ground coffee falling when using moka pot. Therefore, aim of the present invention is to provide a funnel for moka pots able to avoid the falling out phenomenon of the ground coffee from the filter edge.

According to another aim, the present invention provides a coffee maker comprising a device apt to avoid the ground coffee falling out form the edge of the coffee maker while brewing coffee.

The present invention solves the prefixed aims since it is a device for making easy the introduction of the ground coffee in a moka pot provided with boiler, comprising at least an inner cylindrical surface, at least a surface shaped as a circular crown and at least a first inner surface of variable diameter **characterized in that** said inner cylindrical surface has a diameter greater than that of the boiler thread for coffee makers with which it is possible to use the device and said surface shaped as a circular crown allows the device to be put on the thread of said boiler since it has an outer diameter greater than the diameter of said thread and an inner diameter lower than that of said thread.

These and other advantages will be clearer from the detailed description, which refers to the appended figures 1 to 11.
Figure 1 shows an axonometric view of the device according to the present invention (shown in section) positioned on the boiler of a coffee maker;
Figure 2 shows a side view of figure 1;
Figures 3 and 4 show two preferred embodiments of the device section according to the present invention;
Figures 5 and 6 show two views of another embodiment of the device according to the present invention;
Figures 7, 8 and 9 show some views of an embodiment of two pieces of the device according to the present invention;
Figure 10 shows the device according to the present invention, put on the boiler of a moka pot, with the ground coffee added as a cone in the filter-holder;
Figure 11 shows an example of a device known at the state of the art.

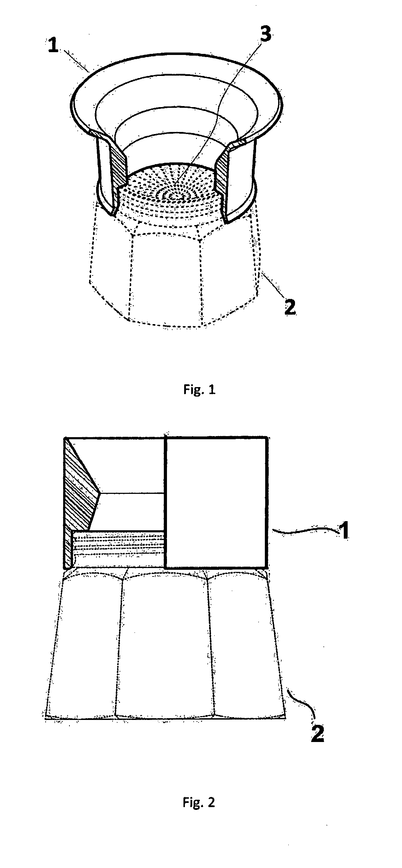

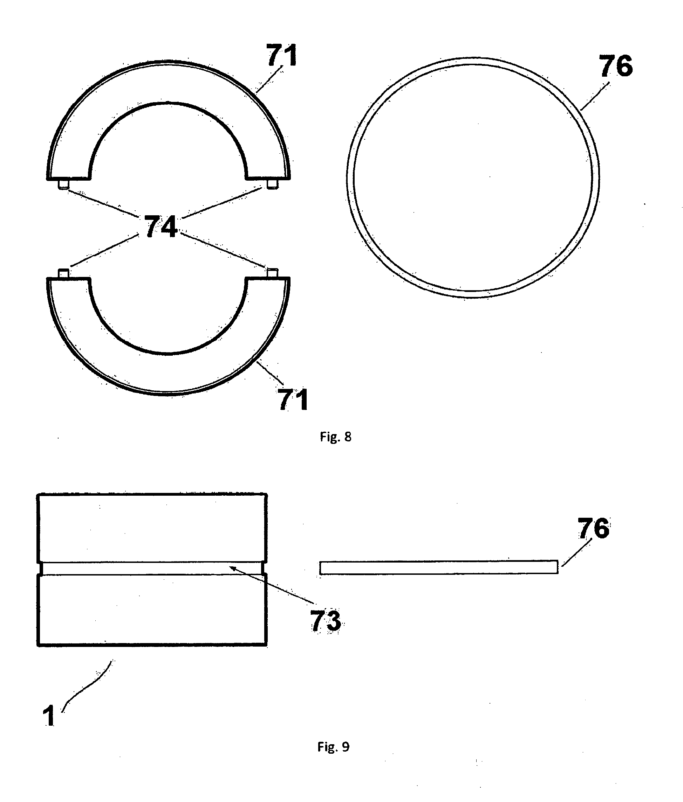

As it is shown in figure 1, the device according to the present invention is a funnel (1) (as better described in the following) apt to be positioned on the area on the filter (3) when this one is positioned on the boiler (2) of the coffee maker. As it is shown as a way of example in figures 1, 2, 5, and 8 the device (1) according to the present invention is a funnel shaped as a rotation solid whose inner section is apt to position the funnel (1) on the boiler (2) of the coffee maker.

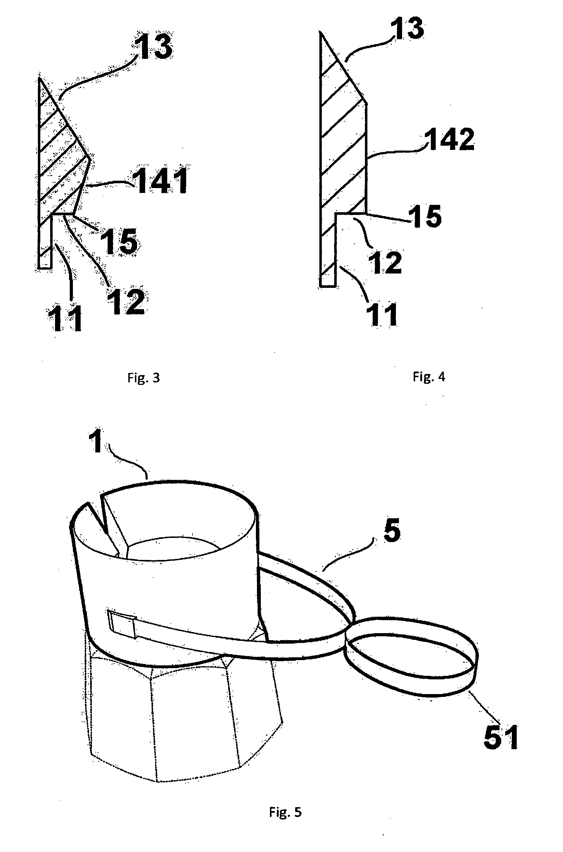

In particular, as it is shown in figures 3 and 4, the funnel section has at least a vertical cylindrical surface (11) with diameter greater than that of the thread of the boiler (2) on which it is to be put, and at least a horizontal surface (12) apt to be positioned on the upper edge of the boiler (2) and whose lower diameter (15) is lower than the inner diameter of the filter (3) which has to be positioned on the boiler.

The funnel (1) further comprises at least a first inner surface (13), having a diameter decreasing towards the coffee maker, apt to make easy the addition of the ground coffee in the filter (3). Said inner surface (13) can be shaped as a frustum of cone or can be curved with any profile, on condition that the same is useful to convey the ground coffee in the filter. In case the surface is shaped as a frustum of cone, it is clearly arranged in such a way that it has the greater base upwards when the funnel is positioned on the coffee maker. The funnel can comprise a second frustum conical surface (141) which connects the first frustum conical surface (13) and the horizontal surface (12) arranged with the greater base of the frustum of cone downwards when the funnel is positioned on the coffee maker so that it is easier the "cone" addition of the ground coffee in the filter and the friction between the same surface and the ground coffee is avoided when the funnel is lifted, thus avoiding that the funnel drags the ground coffee outside the filter. Alternatively, the funnel can have a vertical union surface (142) between said first frustum conical surface (13) and said horizontal surface (12).

When the funnel is in position on the coffee maker, the inner section of the funnel provided with the lower diameter is higher than the edge of the coffee maker.

Moreover, the proportions of the device are preferably such that when inside the filter-holder a cone of ground coffee of suitable quantity is present, the height of the peak of the cone is lower than that of the device according to the present invention.

Therefore, in order to make easy the ground coffee containment the height of the device according to the present invention is substantially comparable with the diameter of the same, as it is clear from the figures. In fact the height of the device according to the present invention (indicated with "H" in figure 10) is preferably greater than the half diameter of the thread of the coffee maker (indicated with "d" in figure 10), and more preferably the height (H) of the device is greater than three quarters of the diameter (d) of the coffee maker.

In order to obtain the desired effect, the height of the device measured from its base up to the section of the lower diameter (indicated with "h" in figure 10) is greater than 30% of the diameter of the thread of the coffee maker (indicated with "d" in figure 10), and preferably not lower than 40%. Optimal values of the h/d ratio to obtain the aims of the invention are between 0,4 and 0,5.

The device according to the present invention can be realized in various materials: plastics of various type, nylon, aluminum or any other suitable material as porcelain, metal, polystyrene, wood and others.

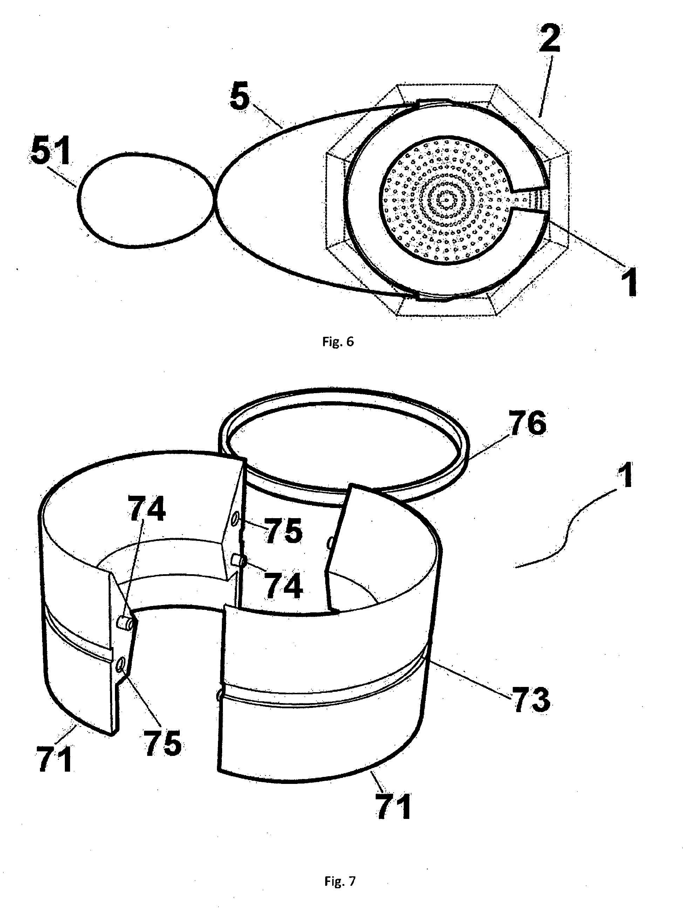

It can be realized as a single piece according to what is shown in figures 1 and 2, and figure 6 or in two pieces according to the embodiment of figure 7.

In the embodiment shown in figure 7 the device is made up of two examples of a single piece (71) realized in such a way that it can be coupled with a second identical piece by means of projections (74) and relative holes (75). Said holes (75) and said projections (74) can be conveniently conic to make easy the two pieces to be coupled. Conveniently it can be provided an outer groove (73) in which an elastic element (76) is engaged to guarantee that the coupling lasts once the two identical pieces (71) are assembled.

According to another embodiment, shown in figures 5 and 6, the device (1) according to the present invention can comprise gripping means (5) useful for positioning the device on the boiler (2) and possibly provided with means (51) apt to allow the device to be hung on the wall, for example to classical kitchen hooks. In particular, in the embodiment shown in figures 5 and 6 said means (51) for hanging the device to the wall are of pliers type, and configured in such a way that by tightening the outer portion (51), the inner portion (52) is enlarged thus allowing to vary slightly, always according to elastic deformations, the mounting diameter of the funnel (1), which is conveniently provided with a cut (16) to allow the same to be deformed.

Those described are only preferable embodiments of the device defined by the following claims.

## Claims

1. Device for making easy the introduction of ground coffee in a moka pot provided with boiler (2), comprising, starting from the base of the device,
a. at least an inner cylindrical surface (11),
b. at least a surface (12) shaped as a circular crown,
c. at least an inner surface of variable diameter (13) which defines a minimum diameter section, lower than the diameter (d) of the thread of said boiler
wherein said inner cylindrical surface (11) is of greater diameter than the diameter (d) of the thread of the boiler (2) for coffee makers with which the device can be used,
wherein said surface shaped as a circular crown (12) has an outer diameter (16) greater than the diameter (d) of said thread of the boiler and an inner diameter (15) lower than the diameter (d) of said thread and allows the device to be put on the thread of said boiler (2),
**characterized in that**
the height (h) of the device measured from its base up to the minimum diameter section is greater than 30% of the diameter (d) of the thread of the coffee maker.

2. Device for making easy the introduction of ground coffee in a moka pot provided with boiler (2) according to claim 1, **characterized in that** the height (h) of the device measured from its base up to its minimum diameter section is greater than 40% of the diameter (d) of the thread of the coffee maker.

3. Device for making easy the introduction of ground coffee in a moka pot provided with boiler (2) according to claim 1 or 2, **characterized in that** the whole height (H) of the device is greater than half diameter (d) of the thread and preferably greater then three quarters of said diameter (d).

4. Device for making easy the introduction of ground coffee in a moka pot provided with boiler (2) according to any one of the preceding claims, **characterized in that** the device comprises two examples of a piece (71) realized in such a way that it is coupled to a second identical piece (71) by means of projections (74) and relative holes (75).

5. Device for making easy the introduction of ground coffee in a moka pot provided with boiler (2) according to claim 4, further comprising a groove (73) in which an elastic element (76) can be engaged to guarantee that the coupling lasts once the two identical pieces (71) are assembled.

6. Device for making easy the introduction of ground coffee in a moka pot provided with boiler (2) according to any one of the preceding claims, further comprising gripping means (5).

7. Device for making easy the introduction of ground coffee in a moka pot provided with boiler (2) according to claim 6, **characterized in that** said gripping means comprise means (51) apt to allow the device to be hung.

8. Moka pot comprising a device according to any one of the preceding claims.

## Patentansprüche

1. Gerät zur Erleichterung der Einführung von gemahlenem Kaffee in eine Espressokanne mit Kessel (2), bestehend aus, am Fuß des Geräts angefangen,
a. mindestens einer inneren zylindrische Fläche (11),
b. mindestens einer Fläche (12) in Form einer kreisförmigen Krone,
c. mindestens einer inneren Fläche mit variablem Durchmesser (13), die den kleinsten Durchmesserabschnitt vorgibt, welcher geringer als der Durchmesser (d) des Gewindes des erwähnten Kessels ist,
worin die erwähnte zylindrische Innenfläche (11) einen größeren Durchmesser hat als Durchmesser (d) des Gewindes des Kessels (2) für Espressomaschinen, mit denen das Gerät verwendet werden kann,
worin die erwähnte Fläche in Form einer kreisförmigen Krone (12) einen Außendurchmesser (16) hat, der größer als der Durchmesser (d) des erwähnten Kesselgewindes ist, und einen Innendurchmesser (15), der kleiner als der Durchmesser (d) des erwähnten Gewindes ist und ein Aufsetzen des Geräts auf das Gewinde des erwähnten Kessels (2) ermöglicht, **dadurch gekennzeichnet, dass** die Höhe (h) des Geräts, vom Fuß des Geräts aufwärts bis zum kleinsten Durchmesserabschnitt gemessen, über 30 % des Durchmessers (d) des Gewindes der Espressokanne beträgt.

2. Gerät zur Erleichterung der Einführung von gemahlenem Kaffee in eine Espressokanne mit Kessel (2) gemäß Anspruch 1, **dadurch gekennzeichnet, dass** die Höhe (h) des Geräts, gemessen von seinem Fuß aufwärts bis zum kleinsten Durchmesserabschnitt, über 40 % des Durchmessers (d) des Gewindes der Espressokanne beträgt.

3. Gerät zur Erleichterung der Einführung von gemahlenem Kaffee in eine Espressokanne mit Kessel (2) gemäß Anspruch 1 oder 2, **dadurch gekennzeichnet, dass** die Höhe (h) des Geräts mehr als den halben Durchmesser (d) des Gewindes und vorzugsweise mehr als drei Viertel dieses Durchmessers (d) beträgt.

4. Gerät zur Erleichterung der Einführung von gemahlenem Kaffee in eine Espressokanne mit Kessel (2) gemäß einem der vorangegangenen Ansprüche, **dadurch gekennzeichnet, dass** das Gerät aus zwei identischen Ausführungen eines Teils (71) besteht, welches so gebaut ist, dass es sich mit dem zweiten identischen Teil mithilfe von Stiften (74) und Bohrungen (75) verbinden lässt.

5. Gerät zur Erleichterung der Einführung von gemahlenem Kaffee in eine Espressokanne mit Kessel (2) gemäß Anspruch 4, das weiterhin aus einer Rille (73) besteht, in die ein elastisches Element (76) eingelegt werden kann, um zu garantieren, dass die Verbindung nach Zusammenfügung der beiden identischen Teile (71) hält.

6. Gerät zur Erleichterung der Einführung von gemahlenem Kaffee in eine Espressokanne mit Kessel (2) gemäß einem der vorangegangenen Ansprüche, das außerdem aus einer Greifvorrichtung (5) besteht.

7. Gerät zur Erleichterung der Einführung von gemahlenem Kaffee in eine Espressokanne mit Kessel (2) gemäß Anspruch 6, **dadurch gekennzeichnet, dass** die erwähnte Greifvorrichtung über eine weitere Vorrichtung (51) zum Aulhängen des Geräts verfügt.

8. Espressokanne, die ein Gerät gemäß einem der vorangehenden Anspruche enthält.

## Revendications

1. Dispositif visant à faciliter l'introduction de café moulu dans une cafetière italienne pourvue d'une chaudière (2), comportant, en partant de la base du dispositif,
a. au moins une surface interne cylindrique (11),
b. au moins une surface (12) en forme de couronne circulaire,
c. au moins une surface interne de diamètre variable (13) qui définit une section de diamètre minimum, inférieur au diamètre (d) du filetage de ladite chaudière,
dans lequel ladite surface cylindrique interne (11) est d'un diamètre supérieur au diamètre (d) du filetage de la chaudière (2) pour les cafetières avec lesquelles le dispositif peut être utilisé,
dans lequel ladite surface en forme de couronne circulaire (12) a un diamètre extérieur (16) supérieur au diamètre (d) dudit filetage de la chaudière et une diamètre intérieur (15) inférieur au diamètre (d) dudit filetage et autorise le placement du dispositif sur le filetage de ladite chaudière (2), **caractérisé en ce que**
la hauteur (h) du dispositif, mesurée de sa base jusqu'à la section de diamètre minimum, est supérieure à 30 % du diamètre (d) du filetage de la cafetière.

2. Dispositif visant à faciliter l'introduction de café moulu dans une cafetière italienne pourvue d'une chaudière (2) selon la revendication 1, **caractérisé en ce que** la hauteur (h) du dispositif, mesurée de sa base jusqu'à la section de diamètre minimum, est supérieure à 40 % du diamètre (d) du filetage de la cafetière.

3. Dispositif visant à Faciliter l'introduction de café moulu dans une cafetière italienne pourvue d'une chaudière (2) selon la revendications 1 ou 2, **caractérisé en ce que** la hauteur totale (H) du dispositif est supérieure la moitié du diamètre (d) du filetage et, de préférence, supérieure à trois quarts dudit diamètre (d).

4. Dispositif visant à faciliter l'introduction de café moulu dans une cafetière italienne pourvue d'une chaudière (2) selon l'une quelconque des revendications précédentes, **caractérisé en ce que** le dispositif comporte deux exemplaires d'une pièce (71) réalisée de manière à être accouplée à une seconde pièce identique (71) au moyen de saillies (74) et de trous correspondants (75).

5. Dispositif visant à faciliter l'introduction de café moulu dans une cafetière italienne pourvue d'une chaudière (2) selon la revendication 4, comportant en outre une gorge (73) dans laquelle un élément élastique (76) peut être engagé afin de garantir que l'accouplement dure une fois que les deux pièces identiques (71) sont assemblées.

6. Dispositif visant à faciliter l'introduction de café moulu dans une cafetière italienne pourvue d'une chaudière (2) selon l'une quelconque des revendications précédentes, comportant en outre un moyen de retenue (5).

7. Dispositif visant à faciliter l'introduction de café moulu dans une cafetière italienne pourvue d'une chaudière (2) selon la revendication 6, **caractérisé en ce que** ledit moyen de retenue comporte un moyen (51) apte à autoriser la suspension du dispositif.

8. Cafetière italienne comportant un dispositif selon l'une quelconque des revendications précédentes.
